# EUROPÄISCHE PATENTSCHRIFT

(11) **EP 1 531 091 B1**
(45) Veröffentlichungstag und Bekanntmachung des Hinweises auf die Patenterteilung: **10.01.2007**
(21) Anmeldenummer: 04026845.0
(22) Anmeldetag: 11.11.2004
(51) Int. Cl.: B60R 13/08

(54) **In Schächte, Rohrleitungen, Fahrzeug-Instrumententafeln, Fahrzeugtüren oder dergleichen einbaubarer Schallabsorber sowie Verfahren zur Herstellung und zum Einbau**
Insertable noise insulation means for recesses, conduits, vehicle dashboards, doors and similar, manufacturing and insertion process thereof
Insonorisant encastrable dans des renfoncements, conduits, tableaux de bord, portes de véhicules et similaire, son procédé de fabrication et d'encastrement

(30) Priorität: 12.11.2003 DE 10352783
(43) Veröffentlichungstag der Anmeldung: 18.05.2005
(73) Patentinhaber: Stankiewicz GmbH, 29205 Celle (DE)
(72) Erfinder: Valentin, Erhard, 29352 Adelheidsdorf (DE)
(74) Vertreter: Melzer, Wolfgang

(56) Entgegenhaltungen:
- DE-A- 3 244 968
- GB-A- 457 633
- US-A1- 2002 150 742
- PATENT ABSTRACTS OF JAPAN Bd. 0131, Nr. 83 (M-820), 28. April 1989 (1989-04-28) & JP 1 012976 A (NITTO ELECTRIC IND CO LTD), 17. Januar 1989 (1989-01-17)
- PATENT ABSTRACTS OF JAPAN Bd. 0113, Nr. 64 (M-646), 27. November 1987 (1987-11-27) & JP 62 139739 A (TOYOTA MOTOR CORP), 23. Juni 1987 (1987-06-23)

## Beschreibung

Die Erfindung betrifft einen in Schächte, Rohrleitungen, Fahrzeug-Instrumententafeln, Fahrzeugtüren oder dergleichen Hohlräume einbaubaren Schallabsorber aus faserigem und/oder porösem Material und ein Verfahren zu dessen Herstellung, sowie ein Verfahren zu dessen Einbau.

Es ist häufig erforderlich, in Schächten, Rohrleitungen oder dergleichen Schallabsorber vorzusehen. Ein typischer Fall sind Entlüftungsleitungen in Kraftfahrzeugen. Üblicherweise wird ein solcher Schallabsorber als Formteil hergestellt und dann an der geeigneten Stelle in dem Schacht, der Rohrleitung oder dergleichen eingebaut. Die Herstellung von Formteilen, beispielsweise aus PUR-Schaum oder dergleichen porösem Material erfordert zunächst die Vorbereitung kostspieliger Formen, mittels denen das Formteil hergestellt wird. Aus wirtschaftlichen Gründen sind daher hohe Stückzahlen erforderlich, um solche Formteile einigermaßen preisgünstig herstellen zu können. Solche Formteile sind demnach auch äußerst invariant gegenüber geringen Änderungen deren Unterbringungsortes und Änderungen in den Abmessungen des Schachts oder der Rohrleitung.

Eine andere Art von Schallabsorbern besteht aus fasrigem Material, wie einem Vliesmaterial, das als Zuschnitt in eine Form eingesetzt wird.

Typische Anwendungen und Unterbringungsorte sind beschrieben in DE 200 07 819 U1, DE 32 44 968 A1, DE 201 03 626 U1.

Dokument US 2002/0150742 offenbart auch einen Schallabsorber, mit einer mehrlagigen Metallfolienstruktur wohin ein Abschnitt der Wellen des Stapels aus Metalfolienlagen zusammengedrückt wird, um die Lagen so zusammenzufalten, daß sie sich überlappen und gegenseitig verblocken.

Es ist Aufgabe der vorliegenden Erfindung, einen Schallabsorber anzugeben, der in einfacher Weise herstellbar ist, insbesondere auch in Kleinserien und der leicht an andere Abmessungen anpassbar ist. Ferner sollen Verfahren zu dessen Herstellung und Einbau angegeben werden.

Die Aufgabe wird bei einem Schallabsorber durch die Merkmale des Anspruches 1 gelöst.

Der Schallabsorber wird durch die Merkmale der abhängigen Ansprüchen weitergebildet.
Ein Verfahren zum Herstellen eines solchen Schallabsorbers ist im Anspruch 7 angegeben, Weiterbildungen sind in den Ansprüchen 8 bis 12 dargestellt. Ferner wird durch die Erfindung auch ein Verfahren zum Einbau eines solchen Schallabsorbers angegeben.

Die Erfindung geht dabei von der Erkenntnis aus, dass die am leichtesten variable Form ein Zuschnitt aus einem im Wesentlichen flächigen Material darstellt.

Die Erfindung wird anhand des in der Zeichnung dargestellten Ausführungsbeispiels näher erläutert. Es zeigen
Fi. 1 im Schnitt einen erfindungsgemäßen Absorber in einem in ein Entlüftungsrohr eingebauten Zustand,

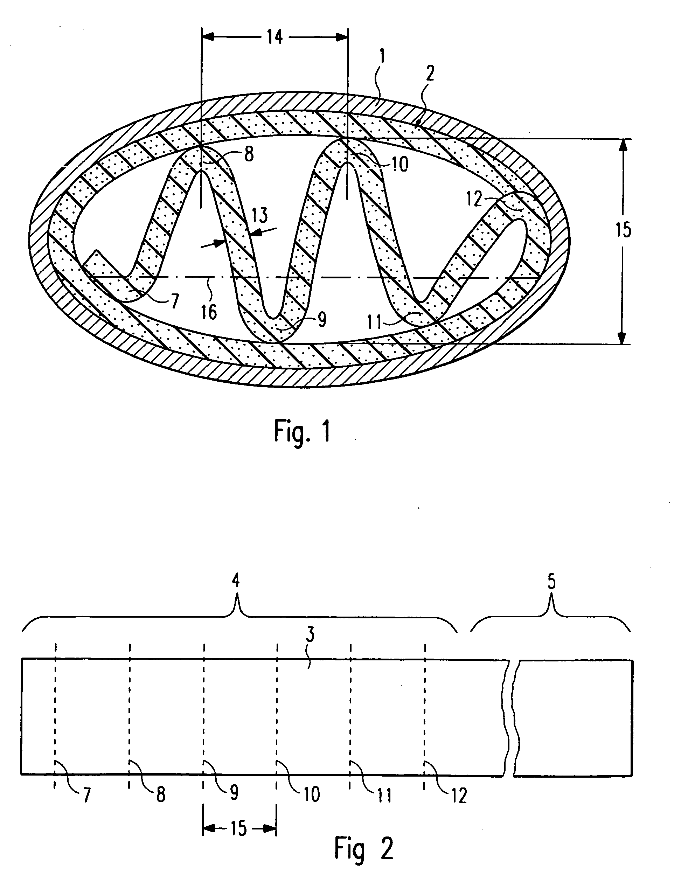

Fig. 2 schematisch einen Zuschnitt zur Verwendung bei der Herstellung eines erfindungsgemäßen Schallabsorbers.

Fig. 1 zeigt zunächst als Beispiel eines Schachtes oder einer Rohrleitung oder eines anderen Anbringungsortes eine im Querschnitt ovale Entlüftungsleitung 1, wie sie bei Kraftfahrzeugen nicht unüblich ist. Diese Leitung 1 kann selbstverständlich auch anderen Querschnitt besitzen. In den dargestellten Querschnittsbereich der Leitung 1 ist ein erfindungsgemäßer Schallabsorber 2 eingesetzt, der aus einem in Fig. 2 dargestellten Zuschnitt 3 hergestellt ist.

Wie an sich bekannt eignen sich als Materialien für Schallabsorber grundsätzlich poröse und/oder faserige Materialien, wie Vliese, Schäume und dergleichen.

Das Ausführungsbeispiel des Schallabsorbers 2 weist zum einen einen Abschnitt mit Faltungen 4 und zum anderen einen Abschnitt 5 auf, der diesen Faltungsabschnitt 4 nach Bildung der Faltungen umhüllt. Ein Schallabsorber gemäß der Erfindung kann aber auch ohne die Umhüllung hergestellt und in die Leitung 1 eingebaut werden. Allerdings ist es von Vorteil, einen solchen umhüllenden Abschnitt 5 vorzusehen, der an der Innenwand der Leitung 1 zur Anlage kommt, da hierdurch die schalltechnischen Wirkungen und die Bauteilstabilität besonders günstig werden.

Der Faltungs-Abschnitt 4 weist beim Ausführungsbeispiel insgesamt 6 Faltungen 7 bis 12 auf, wobei die Faltungslinien bei dem Zuschnitt in Fig. 2 mit den gleichen Bezugszeichen wie in Figur 1 dargestellt sind.

Nachdem im allgemeinen die Form und die Länge der Leitung 1 konstruktiv vorgegeben sind und als unveränderlich angesehen werden müssen und ferner der maximale Durchsatz durch die Leitung ebenfalls als unveränderlich angesehen werden muss, richtet sich die Anzahl und Lage der Faltungen nach den schalltechnischen Gegebenheiten unter Berücksichtigung der Dicke 13 des Materials des Zuschnitts 3, der Porösität bzw. der Strömungsdurchlässigkeit (bzw. dem Strömungswiderstand) dieses Materials in Strömungsrichtung durch die Leitung 1. Aus der hierdurch ermittelten Länge des Zuschnitts 3 bzw. insbesondere des Faltungs-Abschnittes 4 unter gegebenenfalls Berücksichtigung des Umhüllungs-Abschnittes 5 sowie der Querschnittsform der Leitung 1 ergeben sich der Faltungsabstand 14 und die variable Faltungshöhe oder Faltungsscheitelabstand 15, die bzw. der in Fig. 1 und Fig. 2 zwischen den Faltungen 9 und 10 definiert ist. Es zeigt sich, dass insbesondere die Faltungshöhe 15 zwischen den verschiedenen Faltungen sehr unterschiedlich sein kann.

In Fig. 2 ist der Zuschnitt 3 als länglicher streifenförmiger im Wesentlichen rechteckförmiger Zuschnitt dargestellt. Selbstverständlich ist diese Form ebenfalls nicht zwingend, vielmehr richtet sich die Form nach der Innenform der Leitung 1 sowie den schalltechnischen Anforderungen.

Zur Herstellung eines solchen Schallabsorbers 2 wird zunächst der Zuschnitt 3 in üblicher Weise gefertigt. Bei dem Ausführungsbeispiel gemäß Fig. 2, einem langen im Wesentlichen rechteckförmigen Streifen kann beispielsweise von einem Bandmaterial abgelängt werden.

Es werden dann die Faltungen vorgenommen, was beispielsweise maschinell durch eine geeignet eingestellte Maschine erfolgen kann, jedoch durchaus auch von Hand, beispielsweise unter Zuhilfenahme einer Lehre erfolgen kann. Ist ein Umhüllungs-Abschnitt 5 vorgesehen, wird dieser anschließend um die Faltungen gelegt. Der so vorgefertigte Schallabsorber 2 wird dann in seiner Form fixiert, beispielsweise mittels eines Stiftes, mittels umhüllender Kabelbinder, mittels Kleben oder dergleichen. Die Fixierung ist in Fig. 1 schematisch durch eine Strichpunktlinie 16 dargestellt, also als durch einen Stift verwirklicht angesehen. Ein solcher Schallabsorber 2 ist dann lagerfähig und transportfähig und darüber hinaus zum sofortigen Einbau in die Leitung 1 geeignet.

Darüber hinaus ist es zweckmäßig, bei oder nach dem Einbauen in die Leitung 1 die Fixierung, also den Stift 16, zu entfernen, wodurch sich durch Eigenelastizität des Materials der Schallabsorber 2 eng an die Innenwand der Leitung 1 anlegt. Bei Verwendung eines Schaums, wie eines PUR-Schaums, kann adhäsive Ausrüstung der Oberfläche von Vorteil sein, da dann zusätzliche Maßnahmen zur Lagesicherung des Schallabsorbers 2 in der Rohrleitung 1 nicht mehr erforderlich sind.
Zur Erleichterung der Einbaufähigkeit kann es zweckmäßig sein, wenn der fixierte einbaufertige Schallabsorber 2 etwas geringere (Außen-)Abmessungen besitzt als die Innenabmessungen der Leitung 1, da die Einbaubarkeit vereinfacht ist und der Schallabsorber 2 nach Entfernung der Fixierung sich auf Grund seiner Eigenelastizität an die Innenwand der Leitung 1 anlegt. Zum gleichen Zweck kann der einbaufertig vorbereitete Schallabsorber 2 mit einer zusätzlichen Verformung vorgesehen werden (nicht im einzelnen dargestellt).

Wie dargestellt ist der erfindungsgemäße Schallabsorber 2 nicht nur sehr einfach herstellbar, sondern auch sehr schnell an neue Gegebenheiten anpassbar, sodass er insbesondere für Prototypen und Kleinserien besonders geeignet ist.

Der erfindungsgemäße Schallabsorber 2 wurde anhand einer Ausführungsform erläutert, bei der der Faltungsabschnitt 4 und der Umhüllungsabschnitt 5 aus einem gleichen Zuschnitt 3 gebildet sind. Selbstverständlich ist es im Rahmen der Erfindung möglich, die beiden Abschnitte 4 und 5 getrennt herzustellen, auch aus unterschiedlichen Materialien. Beispielsweise könnte der Umhüllungsabschnitt 5 aus einem geschlossenen rohrförmigen Material abgelängt werden, in dem der Faltungsabschnitt nach Herstellung der Faltungen eingesetzt wird.

## Patentansprüche

1. In Schächte, Rohrleitungen (1), Fahrzeug-Instrumententafeln, Fahrzeugtüren oder dergleichen einbaubarer Schallabsorber (2) aus fasrigem und/oder porösem Material,
**dadurch gekennzeichnet,**
**dass** er aus einem Zuschnitt (3) gebildet ist, und mehrere Faltungen (7 bis 12) aufweist, wobei die Faltungsabstände (14) und Faltungsscheitelabstände (15) so bemessen sind, dass ein aus dem Zuschnitt (3) gefalteter Schallabsorber (2) die Wände des Schachts, der Rohrleitung (1) oder dergleichen berührt, und unter Berücksichtung des Strömungswiderstandes des Materials der notwendige Durchsatz durch den Schacht, die Rohrleitung (1) oder dergleichen erreicht ist.

2. Schallabsorber nach Anspruch 1,
**dadurch gekennzeichnet,**
**dass** die Faltungen mittels eines sie durchsetzenden Stabs und/oder eines diese umschlingenden Binders, wie eines Kabelbinders oder dergleichen oder durch Kleben mechanisch fixiert (16) sind.

3. Schallabsorber nach Anspruch 1 oder 2,
**dadurch gekennzeichnet,**
**dass** die mehreren Faltungen (7 bis 12) ein Paket bilden, das von einem Zuschnitt (5) eines faserigen und/oder porösem Materials zumindest einlagig umhüllt ist, wobei das umhüllte Paket der Faltungen im Querschnitt dem des Schachtes, der Rohrleitung (1) oder dergleichen entspricht.

4. Schallabsorber nach Anspruch 3,
**dadurch gekennzeichnet,**
**dass** der Umhüllungs-Zuschnitt (5) und der Faltungs-Zuschnitt (4) aus dem gleichen Material bestehen.

5. Schallabsorber nach Anspruch 4,
**dadurch gekennzeichnet,**
**dass** der Umhüllungs-Zuschnitt (5) eine einstückige Fortsetzung des Faltungs-Zuschnitts (4) ist.

6. Schallabsorber nach einem der Ansprüche 1 bis 5,
**dadurch gekennzeichnet,**
**dass** das Material ein Vlies, ein PUR-Schaum oder dergleichen ist.

7. Verfahren zum Herstellen eines Schallabsorber (2) aus fasrigem und/oder porösem Material, der in Schächte, Rohrleitungen (1), Fahrzeug-Instrumententafeln, Fahrzeugtüren oder dergleichen einbaubar ist, **gekennzeichnet durch** die folgenden Schritte,
- Herstellen eines flächigen Zuschnitts (3, 4) aus dem Material,
- Falten (7 bis 12) des Zuschnitts (3, 4), wobei die Faltungsabstände (15) und Faltungsscheitelabstände (14) so bemessen sind, dass ein aus dem Zuschnitt (3, 4) gefalteter Schallabsorber (2) die Wände des Schachts, der Rohrleitung (1) oder dergleichen im eingebauten Zustand berührt und unter Berücksichtigung des Strömungswiderstandes des Materials der notwendige Durchsatz **durch** den Schacht, die Rohrleitung (1) oder dergleichen erreicht ist.

8. Verfahren nach Anspruch 7,
**dadurch gekennzeichnet,**
**dass** nach dem Falten (7 bis 12) des Zuschnitts (3, 4) die Faltungen in ihrer Lage fixiert (16) werden.

9. Verfahren nach Anspruch 7 oder 8,
**dadurch gekennzeichnet,**
**dass** nach dem Falten (7 bis 12) des Zuschnitts (3, 4) das so gebildete Paket von einem Zuschnitt (5) eines faserigen und/oder porösen Materials zumindest einlagig umhüllt wird, wobei das umhüllte Paket im Querschnitt dem des Schachtes, der Rohrleitung (1) oder dergleichen entspricht.

10. Verfahren nach Anspruch 9,
**dadurch gekennzeichnet,**
**dass** das Umhüllen mittels eines Zuschnitts (5) aus dem gleichen Material erfolgt.

11. Verfahren nach Anspruch 10,
**dadurch gekennzeichnet,**
**dass** das Umhüllen mittels eines einstückigen Abschnitts (5) des Zuschnitts (3) erfolgt.

12. Verfahren nach einem der Ansprüche 7 bis 11,
**dadurch gekennzeichnet,**
**dass** das Material ein Vlies, ein PUR-Schaum oder dergleichen ist.

13. Verfahren zum Einbau eines Schallabsorbers (2) nach einem der Ansprüche 1 bis 6 in einen Schacht, eine Rohrleitung (1) oder dergleichen, bei dem der Schallabsorber (2) im gefalteten Zustand in den Schacht, die Rohrleitung (1) oder dergleichen eingesetzt und dort an der vorgesehenen Stelle in der Lage fixiert wird.

14. Verfahren nach Anspruch 13, wenn abhängig von einem der Ansprüche 2 bis 6,
**dadurch gekennzeichnet,**
**dass** beim Einsetzen die Fixierung der Faltungen gelöst wird.

## Claims

1. Sound absorber (2) made of fibrous or other porous material, which can be installed in shafts, pipelines (1), vehicle instrument panels, vehicle doors or similar,
**characterised in that**
it is made from a cut piece (3) and provides several folds (7 to 12), wherein the distances (14) between folds and the distances (15) between the fold apexes are dimensioned in such a manner that a sound absorber (2) folded from the cut piece (3) contacts the walls of the shaft, pipeline (1) or similar, and that the throughput required through the shaft, pipeline (1) or similar is achieved by taking the flow resistance of the material into consideration.

2. Sound absorber according to claim 1,
**characterised in that**
the folds are fixed (16) either mechanically by means of a pin passing through them and/or by means of a tie such as a cable tie or similar passing around them or by gluing.

3. Sound absorber according to claim 1 or 2,
**characterised in that**
the several folds (7 to 12) form a package, which is wrapped with at least one layer of a cut piece (5) of a fibrous and/or porous material, wherein the cross-section of the wrapped package of folds corresponds to that of the shaft, pipeline (1) or similar.

4. Sound absorber according to claim 3,
**characterised in that**
the wrapping cut piece (5) and the folded cut piece (4) consist of the same material.

5. Sound absorber according to claim 4,
**characterised in that**
the wrapping cut piece (5) is a one-piece continuation of the folded cut piece (4).

6. Sound absorber according to any one of claims 1 to 5,
**characterised in that**
the material is a fleece, a PUR foam or similar.

7. Method for manufacturing a sound absorber (2) made of fibrous and/or porous material, which can be installed in shafts, pipelines (1), vehicle instrument panels, vehicle doors or similar,
**characterised by**
the following stages:
- manufacturing a flat cut piece (3, 4) from the material,
- folding (7 to 12) the cut piece (3, 4), wherein the distances (14) between folds and the distances (15) between fold apexes are dimensioned in such a manner that, in the installed condition, a sound absorber (2) folded from the cut piece (3, 4) contacts the walls of the shaft, pipeline (1) or similar, and that the throughput required through the shaft, pipeline (1) or similar is achieved by taking the flow resistance of the material into consideration.

8. Method according to claim 7,
**characterised in that**
the folds are fixed (16) in position after the cut piece (3, 4) has been folded (7 to 12).

9. Method according to claim 7 or 8,
**characterised in that**,
after the cut piece (3, 4) has been folded (7 to 12), the package formed in this manner is wrapped with at least a single layer of a cut piece (5) of a fibrous and/or porous material, wherein the cross-section of the wrapped package corresponds to that of the shaft, pipeline (1) or similar.

10. Method according to claim 9,
**characterised in that**
the wrapping is formed from a cut piece (5) of the same material.

11. Method according to claim 10,
**characterised in that**
the wrapping is provided in one-piece by a portion (5) of the cut piece (3).

12. Method according to any one of claims 7 to 11,
**characterised in that**
the material is a fleece, a PUR foam or similar.

13. Method for installation of a sound absorber (2) according to any one of claims 1 to 6 in a shaft, pipeline (1) or similar, wherein the sound absorber (2) is inserted in the folded condition into the shaft, pipeline (1) or similar and fixed in place at the position provided.

14. Method according to claim 13, when dependent upon any one of claims 2 to 6,
**characterised in that**
the fixing of the folds is released upon insertion.

## Revendications

1. Isolant acoustique (2) pouvant être monté dans des gaines, des canalisations (1), des tableaux de bord de véhicules, des portières de véhicules ou similaires, en matière poreuse ou fibreuse, **caractérisé en ce qu'**il est formé d'une pièce découpée (3) et comporte plusieurs plis (7 à 12), les distances entre les plis (14) et les distances entre les crêtes de plis (15) étant dimensionnées de façon telle, qu'un isolant acoustique (2) plié à partir de la pièce découpée (3) soit en contact avec les parois de la gaine, de la canalisation (1) ou similaire et que le débit nécessaire à travers la gaine, la canalisation (1) ou similaire soit atteint sous considération de la résistance à l'écoulement de la matière.

2. Isolant acoustique selon la revendication 1, **caractérisé en ce que**, les plis sont fixés mécaniquement (16) au moyen d'une barre qui les traverse et/ou d'un lien qui les enlace, comme un lieur de câble ou similaire ou par collage.

3. Isolant acoustique selon la revendication 1 ou 2, **caractérisé en ce que**, les plusieurs plis (7 à 12) forment un paquet qui est enveloppé au moins par une pièce découpée (5) d'une matière fibreuse et/ou poreuse, le paquet de plis enveloppé correspondant par sa section transversale à celle de la gaine, de la canalisation (1) ou similaire.

4. Isolant acoustique selon la revendication 3, **caractérisé en ce que** la pièce découpée enveloppante (5) et la pièce découpée plissée (4) sont dans la même matière.

5. Isolant acoustique selon la revendication 4, **caractérisé en ce que** la pièce découpée enveloppante (5) est un prolongement en une seule pièce de la pièce découpée plissée (4).

6. Isolant acoustique selon l'une quelconque des revendications 1 à 5, **caractérisé en ce que**, la matière est un non-tissé, une mousse de PUR ou similaire.

7. Procédé de fabrication d'un isolant acoustique (2) en matière fibreuse et/ou poreuse, pouvant être monté dans des gaines, des canalisations (1), des tableaux de bord de véhicules, des portières de véhicules ou similaires, **caractérisé par** les étapes suivantes,
- fabrication d'une pièce découpée en nappe (3, 4) dans la matière,
- pliage (7 à 12) de la pièce découpée (3, 4), les distances entre les plis 15) et les distances entre les crêtes des plis (14) étant dimensionnées de façon telle, que lorsqu'il est monté, un isolant acoustique (2) plié à partir de la pièce découpée (3, 4) soit en contact avec les parois de la gaine, de la canalisation (1) ou similaire et que le débit nécessaire à travers la gaine, la canalisation (1) ou similaire soit obtenu sous considération de la résistance à l'écoulement de la matière.

8. Procédé selon la revendication 7, **caractérisé en ce que**, après le pliage (7 à 12) de la pièce découpée (3, 4), on fixe les plis dans leur position (16).

9. Procédé selon la revendication 7 ou 8, **caractérisé en ce que**, après le pliage (7 à 12) de la pièce découpée (3, 4), on enveloppe le paquet ainsi formé d'une pièce découpée (5) d'une matière fibreuse et/ou poreuse d'au moins une couche, le paquet enveloppé correspondant par sa section transversale à celle de la gaine, de la canalisation (1) ou similaire.

10. Procédé selon la revendication 9, **caractérisé en ce que**, l'enveloppement est assuré au moyen d'une pièce découpée (5) dans la même matière.

11. Procédé selon la revendication 10, **caractérisé en ce que**, l'enveloppement est assuré au moyen d'une section (5) en une seule pièce de la pièce découpée (3).

12. Procédé selon l'une quelconque des revendications 7 à 11, **caractérisé en ce que**, la matière est un non-tissé, une mousse de PUR ou similaire.

13. Procédé de montage d'un isolant acoustique (2) selon l'une quelconque des revendications 1 à 6 dans une gaine, dans une canalisation (1) ou similaire, consistant à insérer l'isolant acoustique (2) en position pliée, dans la gaine, la canalisation (1) ou similaire et à l'y fixer en position à l'endroit prévu.

14. Procédé selon la revendication 13, si en dépendance de l'une quelconque des revendications 2 à 6, **caractérisé en ce que**, la fixation des plis se détache lors de l'insertion.
